# EUROPEAN PATENT APPLICATION

(11) **EP 2 448 093 A1**
(43) Date of publication of application: **02.05.2012**
(21) Application number: 09846495.1
(22) Date of filing: 24.06.2009
(51) Int. Cl.: H02K 15/03, H02K 1/27

(54) **SINTERED MAGNET AND METHOD FOR PRODUCING THE SAME**

(71) Applicant: Toyota Jidosha Kabushiki Kaisha, Toyota-shi, Aichi 471-8571 (JP)
(72) Inventor: KANADA Keiu, Toyota-shi Aichi 471-8571 (JP)
(74) Representative: Kuhnen & Wacker
(86) International application number: PCT/JP2009/061471
(87) International publication number: WO 2010/150362

(57) **Abstract**

There is provided a sintered magnet that is capable of, as compared to conventional divided magnets, significantly reducing eddy loss, flexibly accommodating diverse shape and dimensional variations, and significantly lowering productions costs while maintaining the desired coercivity, as well as a method of producing same. It is a sintered magnet 10 in which one kind of base magnet 1 of an identical shape or a plurality kinds of base magnets 1... with varying shapes that is/are in the shape of a rectangular cuboid or cube whose edges are each in the range of 1 to 10 mm in length are plurally provided side by side in each of a longitudinal direction and transverse direction forming a plane and a height direction that is orthogonal to this plane, and the magnetic force between at least adjacent base magnets 1, 1 maintains the joint between the base magnets 1, 1.

## Description

### TECHNICAL FIELD

The present invention relates to, by way of example, a sintered magnet that is to be buried within a rotor that forms an interior permanent magnet motor, and to a method for producing same.

### BACKGROUND ART

Interior permanent magnet motors (IPM motors) comprising permanent magnets buried inside the rotor are capable of attaining a reluctance torque in addition to a magnet torque resulting from the attraction/repulsion between coils and permanent magnets. As a result, they have a higher torque and are more efficient as compared to surface permanent magnet motors (SPM motors), which comprise permanent magnets adhered to the outer circumferential surface of the rotor. Accordingly, such interior permanent magnet motors are used for drive motors of hybrid vehicles and electric vehicles, and so forth, of which high output performance is demanded.

Coils are formed around the stator teeth by having winding wires be wound in a concentrated or distributed manner. Magnetic flux is generated by passing a current through the coils, thereby generating a magnet torque and a reluctance torque between itself and the magnetic flux caused by the permanent magnets. In the case of such distributively wound coils, the number of magnetic poles becomes greater as compared to a case of concentratedly wound coils. Accordingly, when the rotor rotates, the magnetic flux (or the change in magnetic flux) entering the permanent magnets of the rotor from the side of the teeth has relative continuity. Consequently, the change in magnetic flux density when the rotor is rotating is relatively small. In contrast, in the case of concentratedly wound coils, the change in magnetic flux density becomes relatively large. As a result, eddy currents are prone to occur in the permanent magnets, the permanent magnets heat up due to the occurrence of eddy currents, and irreversible thermal demagnetization is caused, thereby compromising the magnetic properties of the permanent magnet themselves.

With regard to drive motors used in modem hybrid vehicles and electric vehicles, in pursuing better motor output performance, by way of example, increases in their revolution rate, and in their number of poles are being sought. As a result of this increase in revolution rate, etc., the rate of fluctuation in the magnetic field acting on the magnets becomes greater. Consequently, the above-mentioned eddy currents are prone to occur, and motor performance actually decreases instead due to the thermal demagnetization of the magnets brought on by heat generation, thus giving rise to a problem in that it leads to lower durability for the motor.

In order to prevent the occurrence of the above-mentioned eddy currents, as well as the occurrence of thermal demagnetization stemming therefrom, with respect to IPM motors, measures are being taken where the permanent magnets are formed from a plurality of divided pieces in advance, and these divided pieces are put together and inserted and installed in a rotor slot. By way of example, IPM motors comprising divided magnets are disclosed in Patent Documents 1 and 2.

On the other hand, with respect to such IPM motors, in controlling their current phase, a negative d-axis current flows therethrough, as a result of which an opposite magnetic field stemming therefrom acts on the permanent magnets. When this opposite magnetic field is large, irreversible demagnetization occurs in the permanent magnets. For this reason, permanent magnets with a coercivity great enough to resist such irreversible demagnetization are employed.

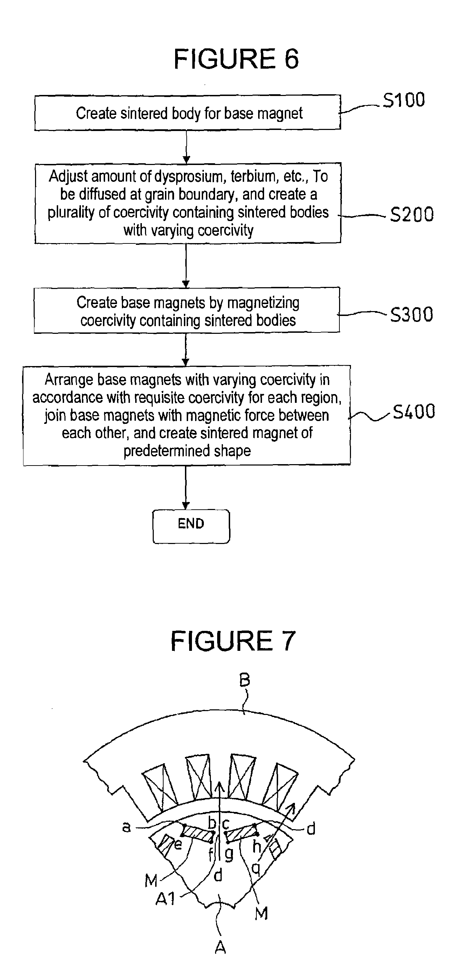

This demagnetization action is described based on Figure 7. Figure 7 is a figure in which two permanent magnets M, M are provided per pole. These two permanent magnets M, M are buried in a substantially V-shaped arrangement in plan view, where they diverge as they approach a stator B from the rotating shaft of a rotor A. It is known that the parts where the demagnetization action is large in IPM motors are corners a, b, c, d of the permanent magnets M, M on the rotor iron core outer circumferential-side, particularly the corners b, c on the d-axis-side. In addition, the magnetic flux is prone to short circuit at a rotor core part A1 between the permanent magnets M, M, which also causes the opposite magnetic field to become greater at the corners b, c of the permanent magnets M, M.

Rare-earth magnets are generally used for the above-mentioned permanent magnets. With respect to such rare-earth magnets, it is possible to increase their coercivity by adding dysprosium (Dy) or terbium (Tb), which are elements with high crystal magnetic anisotropy. However, since these elements are rare and expensive, adding dysprosium, etc., for the purpose of increasing the coercivity of permanent magnets would result directly in an increase in production cost for the permanent magnets.

However, in permanent magnets used in conventional rotors for interior permanent magnet motors, dysprosium, etc., for attaining the coercivity required at the above-mentioned corner parts is used across the entire bodies of the permanent magnets, thereby pushing rotor production costs up. Further, with respect to remanent magnetic flux density which, as in coercivity, is important in terms of the performance of permanent magnets, since it has a tendency to decrease as coercivity increases, more magnets are required to compensate for the decrease in magnetic flux density caused by the increase in coercivity, which further pushes rotor production costs up. As such, how inexpensively a rotor comprising permanent magnets having the desired coercivity with respect to the above-mentioned opposite magnetic field can be produced is now an extremely important issue in the mass-production of hybrid vehicles, etc.
Patent Document 1: JP Patent Application Publication (Kokai) No. 2000-324736 A
Patent Document 2: JP Patent Application Publication (Kokai) No. 2007-166888 A

### DISCLOSURE OF THE INVENTION

### Problems to be Solved by the Invention

Patent Documents 1 and 2 do not specifically disclose specifications of the dimensions of the divided magnets, and merely seek to reduce eddy currents by forming a single permanent magnet from a plurality of divided magnets.

However, according to the present inventors, it has been identified that if, as in conventional divided magnets, one were to simply use divided magnets that fall outside of a predetermined small-dimensioned range and are of large dimensions, the eddy loss reduction effects would be extremely low. With respect to the divided magnets disclosed in Patent Documents 1 and 2, too, it has been identified that one would not be able to expect sufficient eddy loss reduction effects with divided magnets of the dimensions inferred from the overall dimensions of the magnet and number of divisions thereof disclosed in their embodiments.

In addition, with these divided magnets, the other problem mentioned above, that is, that production costs increase when the magnet as a whole is made from divided magnets in which the same amount of dysprosium, etc., is added, cannot be solved.

The present invention is made in view of the problems mentioned above, and an object thereof is to provide a sintered magnet and a production method thereof, wherein, as compared to conventional divided magnets, eddy loss can be reduced significantly, diverse shape and dimensional variations can be accommodated flexibly, and production costs can be lowered significantly while maintaining the desired coercivity.

### Means for Solving the Problems

With a view to accomplishing the object above, a sintered magnet according to the present invention is one in which one kind of base magnet of an identical shape or a plurality of kinds of base magnets with varying shapes that is/are in the shape of a rectangular cuboid or cube whose edges are each in the range of 1 to 10 mm is/are plurally provided side by side in each of a longitudinal direction and transverse direction forming a plane and a height direction that is orthogonal to this plane, wherein the joints among the base magnets are maintained by the magnetic force among at least the base magnets adjacent to one another.

A sintered magnet according to the present invention is a sintered magnet that is made by assembling base magnets that are of a single set of dimensions and a single shape and that are in the shape of a rectangular cuboid or cube whose edges are each in the range of 1 to 10 mm, that is, base magnets of a single type, or a sintered magnet that is made by assembling base magnets that are in the shape of a rectangular cuboid or cube whose edges are each in the range of 1 to 10 mm, but whose dimensions and shape vary.

The expression "identical shape" as used above refers to objects whose shapes and dimensions are identical, and the expression "varying shapes" refers to configurations other than that of the above-mentioned "identical shape," e.g., objects whose planar geometry and dimensions are identical and that vary only in height, objects whose planar geometry and height both vary, etc.

With respect to these dimensional specifications for the base magnets, according to the present inventors, the above-mentioned lower boundary is specified for the following reasons: that it is extremely difficult to produce a sintered magnet of a size where each edge is less than 1 mm; and that, in the case of magnets whose edges are each less than 1 mm, the influence that the internal stress or internal distortion generated by external forces that are applied in the process of producing a small-dimensioned sintered magnet, e.g., polishing, cutting, etc., has on the magnet as a whole is significant, and the coercivity of the surfaces of the base magnets drops significantly.

On the other hand, when, as in the conventional known techniques mentioned above, each edge exceeds 10 mm, eddy loss actually rises dramatically. Thus, the above-mentioned upper boundary is specified because, in reality, the benefits of using divided magnets cannot be reaped to a sufficient degree.

It is noted that, when employing a production method in which dysprosium (Dy) or terbium (Tb) is diffused at the grain boundary in order to grant the base magnets high coercivity, from the standpoint of evenly diffusing these materials across the entire bodies of the base magnets, it is more preferable that the base magnets be rectangular cuboids or cubes whose edges are each 1 to 3 mm.

In addition, since they are cubes or rectangular cuboids whose edges are each 1 to 10 mm, the dimensional variations of such hexahedra are diverse. In particular, in employing such sintered magnets, having the two edges forming the face on which the magnetic flux is directly incident be as short as possible within this edge length range is more effective in reducing eddy loss as much as possible.

With respect to a sintered magnet according to the present invention, the fact that, in addition to being assembled from small-dimensioned base magnets that would not have been conventionally viable, the joints among the inter-assembled base magnets are maintained by at least the magnetic force among pre-magnetized magnets is also one characterizing feature thereof

By way of example, assuming a case where this sintered magnet is inserted into and fixed within the rotor of an IPM motor, once this is inserted into a rotor slot and fixed by means of, for example, a fixative resin, etc., the overall shape of the sintered magnet is maintained.

From such a perspective, by effectively utilizing the magnetic force joints among the base magnets, it becomes possible to assemble small-dimensioned base magnets with one another into a desired shape with ease and, further, with an appropriate joint strength without using highly heat resistant adhesives, etc.

In addition, should, after use, one wish to inspect the coercivity at a given site of this sintered magnet, the joints among the base magnets may be readily undone through, by way of example, a method that demagnetizes by raising the temperature, a method that demagnetizes by applying an opposite magnetic field, etc., and the coercivity state of the base magnet at the desired site may thus be inspected.

Here, examples of sintered magnets addressed by the present invention may include permanent magnets including rare-earth magnets, ferrite magnets, alnico magnets, etc. Further, examples of the rare-earth magnets mentioned above may include ternary neodymium magnets in which iron and boron are added to neodymium, samarium cobalt magnets comprising a binary alloy of samarium and cobalt, samarium iron nitride magnets, praseodymium magnets, etc. In particular, in applying such sintered magnets to drive motors for hybrid vehicles, etc., of which high output is demanded, rare-earth magnets, which have a high maximum energy product (BH)ₘₐₓ as compared to ferrite magnets and alnico magnets, are preferable.

With the above-mentioned sintered magnets of the present invention, sintered magnets with diverse overall shapes may be obtained by either arrangement, i.e., by only assembling base magnets of identical shapes, or by assembling base magnets of a plurality of varying dimensions and shapes.

In addition, a preferred embodiment of a sintered magnet of the present invention is formed of a plurality of kinds of base magnets with varying coercivity, where the base magnets comprise a plurality of types with varying coercivity.

It is readily understandable that the requisite coercivity distribution may vary depending on the intended use of the sintered magnet. However, by way of example, in the case of a rotor for an IPM motor, as shown in Figure 7, the use of dysprosium, etc., in such a manner as to provide regions with relatively greater coercivity at the corner parts on the stator-side with a relatively greater opposite magnetic field and to make the coercivity at other sites relatively smaller leads to a reduction in production costs.

As such, in this embodiment, a plurality of kinds of base magnets with varying coercivity are created in advance, and, depending on the intended use, base magnets with high coercivity are optimally arranged at regions that require relatively greater coercivity, and base magnets with low coercivity at regions that do not require much coercivity. Thus, it becomes possible to obtain sintered magnets that are as inexpensive as possible, while at the same time ensuring sufficient coercivity capability.

In addition, a sintered magnet production method according to the present invention comprises: a first step in which a magnetic powder is sintered to form a sintered body in the shape of a rectangular cuboid or cube whose edges are each in the range of 1 to 10 mm, the sintered body is magnetized, and one kind of base magnet of an identical shape or a plurality of kinds of base magnets of varying shapes is/are produced; and a second step in which the base magnets are provided side by side in each of a longitudinal direction and transverse direction forming a plane and a height direction that is orthogonal to this plane, and a sintered magnet of a predetermined shape is produced by joining the base magnets by means of magnetic forces among the base magnets adjacent to one another.

With this production method, it becomes possible to assemble extremely small-dimensioned base magnets with one another and into a desired shape with ease in a highly efficient manner. Although the present production method is such that the dimensions of the base magnets are significantly small as compared to conventional divided magnets, it is possible to effectively suppress the lengthening of production time.

In addition, by employing a production method in which a plurality of types of the base magnets with varying coercivity are produced in the first step, and in which a magnet for a motor is produced from the plurality of kinds of base magnets with varying coercivity in the second step, it is possible to obtain a sintered magnet having an optimal coercivity distribution and that is as inexpensive as possible.

Here, with respect to the method of producing base magnets with varying coercivity, there are methods that use materials with differing coercivity for magnetic powders in the stage of press molding a sintered body, methods in which, after a sintered body has been press molded with a homogenous material and when impregnating the grain boundary with dysprosium, etc., the diffused amount thereof is adjusted, and so forth.

### Effects of the Invention

As can be understood from the description above, with a sintered magnet of the present invention, or a sintered magnet obtained through a production method of the present invention, one may expect dramatic eddy loss reduction effects as compared to conventionally known divided magnets. By virtue of the fact that base magnets of small dimensions within a predetermined producible range are assembled in an extremely simple joint arrangement, namely at least the magnetic force among the magnets, the sintered magnet is inexpensive, of high-quality, and, further, has diverse shape variations. In addition, by arranging a plurality of kinds of base magnets with differing coercivity at respectively appropriate locations depending on the requisite coercivity, it becomes a sintered magnet that has an optimal coercivity distribution and is as inexpensive as possible.

### BRIEF DESCRIPTION OF THE DRAWINGS

Figure 1 is a perspective view showing one embodiment of a sintered magnet of the present invention.
Figure 2 is a correlation graph illustrating the relationship between the edge length of a divided magnet (dimensions of a divided magnet) and remanent magnetic flux density as well as eddy current loss as identified by the present inventors.
Figure 3 is a perspective view showing another embodiment of a sintered magnet of the present invention.
Figure 4 is a perspective view showing still another embodiment of a sintered magnet of the present invention.
Figure 5 is a perspective view showing still another embodiment of a sintered magnet of the present invention.
Figure 6 is a flowchart of one embodiment of a sintered magnet production method of the present invention.
Figure 7 is a schematic view illustrating a situation where an opposite magnetic field resulting from a negative d-axis current is acting on permanent magnets of a conventional IPM motor.

### List of Reference Numerals

1,1',1", 1a, 1b, 1c... base magnet, 10,10A, 10B, 10C... sintered magnet

### BEST MODES FOR CARRYING OUT THE INVENTION

Embodiments of the present invention are described below with reference to the drawings. It is noted that the shape of the sintered magnet assembled from base magnets is, naturally, by no means limited to those of the illustrated examples.

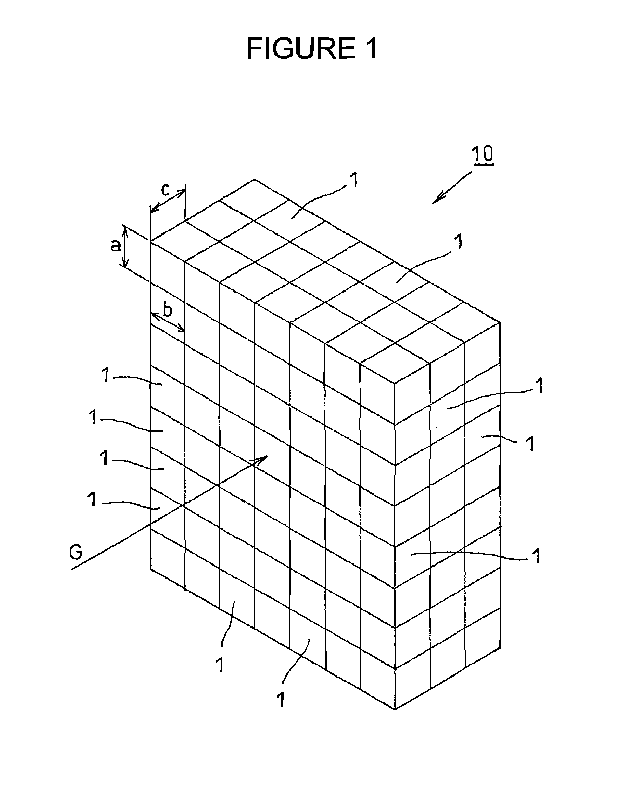

Each of Figures 1, 3, 4 and 5 is a perspective view illustrating an embodiment of a sintered magnet.

First, the sintered magnet 10 shown in Figure 1 is formed from one kind of base magnet of an identical shape. A plurality of kinds of base magnets 1 in the shape of a cube, where the length of the longitudinal edge: a, the length of the transverse edge: b, and the height: c are all the same, are provided side by side in each of the longitudinal direction, the transverse direction and the height direction. The base magnets 1, 1 are joined with one other solely by means of the magnetic forces that they have.

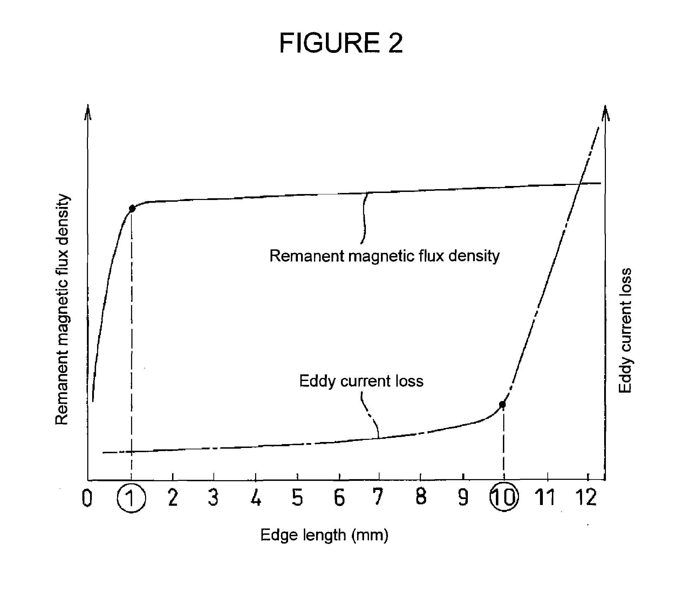

Here, edge lengths a, b and c of the base magnets 1 are set within the range of 1mm or above to 10 mm or below. The reasons for setting the edge length range as such will be described with reference to Figure 2.

The graph shown in Figure 2 is a correlation graph illustrating the relationship between the edge length of the divided magnets (the dimensions of the divided magnets) and remanent magnetic flux density as well as eddy current loss based on empirical findings by the present inventors.

One of the biggest reasons for employing divided magnets is reducing eddy current loss that could occur within magnets. As such, looking at the correlation between the respective edge lengths of the divided magnets and eddy current loss, it is identified that an inflection point in eddy current is reached at an edge length of approximately 10 mm, and that it increases dramatically once 10 mm is exceeded.

With respect to this tendency, by way of example, in the case of the sintered magnet 10 shown in Figure 1, assuming that the magnetic flux enters the front face shown in the figure in the direction of arrow G, it is important that at least the longitudinal edge length: a and the transverse edge length: b thereof both be 10 mm or below. Should one of them exceed 10 mm, the eddy loss reduction effect would be significantly compromised.

On the other hand, with respect to remanent magnetic flux density, which is an important element in terms of magnet performance, it has been identified that it reaches an inflection point at an edge length of the base magnets of approximately 1 mm, has a tendency to gradually increase at an edge length of 1 mm or above, and that remanent magnetic flux density drops dramatically at less than 1 mm.

This is due to the fact that the influence the internal stress and internal distortion generated by external forces acting on the base magnets during polishing, cutting, etc., which are employed in the process of producing the base magnets, have on the base magnets as a whole becomes extremely strong.

This fact signifies how difficult it is to produce the base magnets, and from this perspective, the edge length of the base magnets is specified as 1 mm or above.

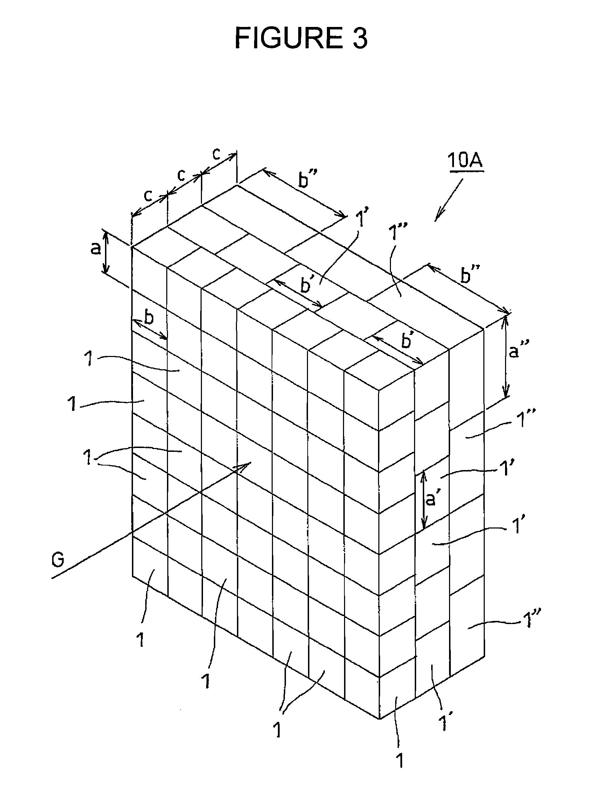

The sintered magnet 10A shown in Figure 3 is formed of a plurality of kinds of base magnets with varying shapes, and comprises base magnets 1, 1', 1" whose planar dimensions gradually increase in the following order: front tier, middle tier, rear tier.

By way of example, assuming that the magnetic flux enters in the direction of arrow G, by having the dimensions of the base magnets 1 in the front face, upon which the magnetic flux G is directly incident, be relatively small, more specifically, by having the front tier edge lengths: a and b both be within the range of 1 mm or above and 10 mm or below and relatively small (i.e., middle tier has edge lengths: a' and b', and rear tier has edge lengths: a" and b", where a, b < a', b' < a", b"), it is possible to minimize eddy current loss.

In this embodiment, by having the dimensions of the base magnets 1" in the rear tier, where the influence of the magnetic flux is relatively light, be relatively large, it leads to an improvement in machinability as well.

Nonetheless, in the case of the sintered magnet 10 shown in Figure 1, since the sintered magnet 10 of the desired shape is produced by only producing the base magnets 1 of a single type and assembling them, even if the sintered magnet 10 is such that all of the base magnets are as small dimensioned as is possible, the production efficiency thereof is high.

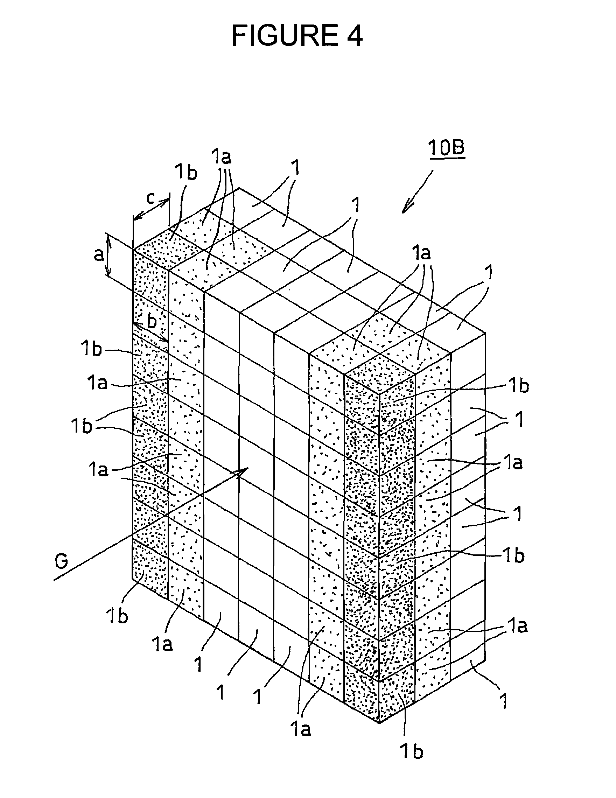

The sintered magnet 10B shown in Figure 4 is, as in the sintered magnet 10 shown in Figure 1, formed of a single type of cube-shaped base magnets. However, it takes on a structure where base magnets with varying coercivity are arranged in accordance with the requisite coercivity of each region of the sintered magnet 10B.

By way of example, with respect to an arrangement where this sintered magnet 10B is buried within the rotor of an IPM motor, and where magnetic flux enters in the direction of arrow G from the side of a stator not shown in the diagram, there are significant demagnetization actions at the corner parts on the stator-side, as was explained in connection with the opposite magnetic field with respect to permanent magnets of conventional IPM motors with reference to Figure 7.

As such, base magnets 1b, which form corner part columns, are made to contain a relatively large amount of dysprosium or terbium to make it possible to increase their coercivity. Base magnets 1a that form the surrounding columns thereof are made to contain less dysprosium, etc., relative to the base magnets 1b. The base magnets 1 with an extremely low content of dysprosium, etc., or that contain none are arranged at regions with almost no demagnetization action or no demagnetization action at all.

By thus producing the sintered magnet 10B in which the base magnets 1, 1a, 1b with varying coercivity are arranged in accordance with the requisite coercivity of each region, it is possible to reduce production costs thereof dramatically, while ensuring sufficient coercivity performance.

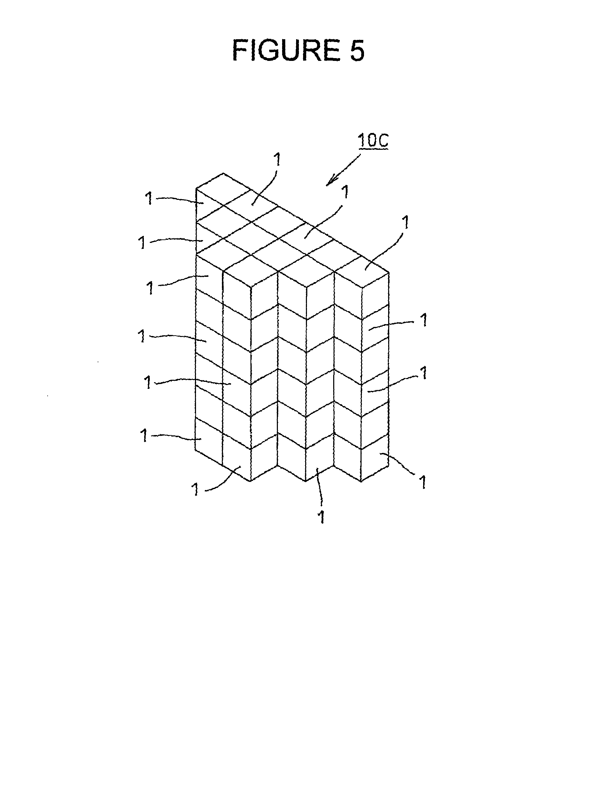

In addition, the sintered magnet 10C shown in Figure 5 is one in which base magnets 1, 1 of identical shapes are assembled, and its planar geometry takes on a multi-tiered shape. It is noted that diverse shapes exist for sintered magnets besides those in Figures 1, 3 and 4 and in Figure 5, and sintered magnets with diverse shape variations may be obtained by varying the shapes of the base magnets, or by varying their assembly arrangement.

Turning next to the sintered magnet 10B shown in Figure 4 where coercivity varies from region to region and there exists a coercivity distribution, its production method will be described generally with reference to the production flow in Figure 6.

First, in step S100, sintered bodies for the base magnets are created. In other words, a magnetic powder for rare-earth magnets is generated, and this magnetic powder is compacted to produce sintered bodies for the base magnets.

Next, the diffusion amount of dysprosium or terbium, etc., is adjusted in accordance with the requisite coercivity, thereby creating coercivity containing sintered bodies by diffusing at the grain boundary dysprosium, etc., whose amount added is adjusted for each of the base magnets 1, 1a, 1b (step S200).

The three types of coercivity containing sintered bodies with differing coercivity produced in step S200 are placed in a magnetic field and magnetized to produce the three types of base magnets 1, 1a, 1b (step S300).

It is noted that, besides the illustrated flow, the method may also be one in which the compacting and magnetization of the sintered bodies are performed together, that is, a method in which in-magnetic field compacting is performed, and in which dysprosium, etc., is diffused at the grain boundary after the in-magnetic field compacting.

Finally, the base magnets 1, 1a, 1b of varying coercivity are arranged so as to be in the arrangement shown in Figure 4, that is, in accordance with the requisite coercivity of each region, and assembly of the base magnets with one another is performed.

Here, the joining of the base magnets with one another is performed solely by means of the magnetic force that each of the base magnets 1, 1a, 1b has, and there is no need to use a heat resistant adhesive, or the like, at all. However, that is not to say the use of adhesives, etc., is excluded altogether, and any desired adhesive may be used as required.

By virtue of the fact that the base magnets are joined with one another by magnetic force, the assembly efficiency thereof is extremely high. Even if the sintered magnet 10B has base magnets whose dimensions are extremely small compared to divided magnets of conventional structures, its production efficiency would never drop.

In addition, to illustrate an embodiment in which this sintered magnet 10B is buried in a rotor for an IPM motor, even though the sintered magnet 10B is one in which the base magnets are joined with one another simply and solely by means of magnetic force and in which the overall shape is secured solely by means of magnetic force, since in-slot fixation thereof is actually ensured with a fixative resin, etc., while it is in an attitude where it is inserted in a magnet slot, the sintered magnet 10B is capable of delivering sufficient performance with this joint arrangement.

Although embodiments of the present invention have been discussed in detail above using the drawings, specific configurations are by no means limited to these embodiments. Even if design modifications are made within a scope that does not depart from the spirit of the present invention, they are to be covered by the present invention.

## Claims

1. A sintered magnet, wherein
One kind of base magnet of an identical shape or a plurality of kinds of base magnets with varying shapes that is/are in the shape of a rectangular cuboid or cube whose edges are each in the range of 1 to 10 mm in length is/are plurally provided side by side in each of a longitudinal direction and transverse direction forming a plane and a height direction that is orthogonal to this plane, and
joints among the base magnets are maintained by magnetic forces among at least the base magnets adjacent to one another.

2. The sintered magnet according to claim 1, wherein the base magnets comprise a plurality of types with varying coercivity, and the sintered magnet is formed of a plurality of the base magnets with varying coercivity.

3. The sintered magnet according to claim 1 or 2, wherein the sintered magnet is to be buried inside a rotor that forms an IPM motor.

4. A sintered magnet production method, comprising:
a first step in which a magnetic powder is sintered to form a sintered body in the shape of a rectangular cuboid or cube whose edges are each in the range of 1 to 10 mm in length, the sintered body is magnetized, and one kind of base magnet of an identical shape or a plurality of kinds of base magnets of varying shapes is/are produced; and
a second step in which the base magnets are provided side by side in each of a longitudinal direction and transverse direction forming a plane and a height direction that is orthogonal to this plane, and a sintered magnet of a predetermined shape is produced by joining the base magnets by means of magnetic forces among the base magnets adjacent to one another.

5. The sintered magnet production method according to claim 4, wherein the base magnets of a plurality of types with varying coercivity are produced in the first step, and the base magnets with varying coercivity are arranged in accordance with a requisite coercivity of each region of the sintered magnet in the second step.
